# EUROPÄISCHE PATENTSCHRIFT

(11) **EP 1 106 327 B1**
(45) Veröffentlichungstag und Bekanntmachung des Hinweises auf die Patenterteilung: **22.10.2003**
(21) Anmeldenummer: 00119966.0
(22) Anmeldetag: 14.09.2000
(51) Int. Cl.: B29C 47/06, B29C 47/22, B29C 47/28

(54) **Extrusionskopf für das Blasformen von Hohlkörpern aus thermoplastischem Kunststoff**
Extrusion die for blow moulding hollow articles from thermoplastic material
Tête d'extrusion pour la fabrication de corps creux en matière thermoplastique par extrusion-soufflage

(30) Priorität: 10.12.1999 DE 19959482
(43) Veröffentlichungstag der Anmeldung: 13.06.2001
(73) Patentinhaber: SIG Kautex GmbH & Co. KG, 53229 Bonn (DE)
(72) Erfinder: Miebach, Klaus, 53721 Siegburg (DE)
(74) Vertreter: Valentin, Ekkehard, Dipl.-Ing.

(56) Entgegenhaltungen:
- EP-A- 0 806 279
- US-A- 4 484 883
- US-A- 5 667 818
- PATENT ABSTRACTS OF JAPAN vol. 010, no. 326 (M-532), 6. November 1986 (1986-11-06) & JP 61 134220 A (TOYO SEIKAN KAISHA LTD), 21. Juni 1986 (1986-06-21)
- PATENT ABSTRACTS OF JAPAN vol. 1998, no. 03, 27. Februar 1998 (1998-02-27) & JP 09 300442 A (KAO CORP), 25. November 1997 (1997-11-25)

## Beschreibung

Die Erfindung betrifft einen Extrusionskopf für das Blasformen von Hohlkörpern aus thermoplastischem Kunststoff, der einen aus mindestens zwei unterschiedlichen Kunststoffen bestehenden Vorformling herstellt, umfassend mindestens drei Schmelzeeinspeisestellen, wobei eine erste Kunststoffschmelze von einer ersten Schmelzeeinspeisestelle in einer ersten Richtung entlang eines ersten Fließweges über einen Stegdomhalter in einen ersten Ringspalt geführt wird, der die Dicke des Vorformlings in bezug auf die erste Kunststoffschmelze beeinflußt, wobei mindestens eine zweite Kunststoffschmelze von einer zweiten Schmelzeeinspeisestelle entlang eines zweiten Fließweges bis zu einem zweiten Ringspalt geführt wird, wobei die Fließwegrichtung des ersten Fließweges und des zweiten Fließweges über einen großen Teil der jeweiligen Fließwege unter einem Winkel, vorzugsweise im wesentlichen rechtwinklig, zueinander verlaufen und nur im letzten Bereich in der Nähe des ersten und zweiten Ringspalts im wesentlichen parallel zueinander verlaufen, sowie eine den Ringspalten nachgeschaltete Düse, die die Dicke des Vorformlings vorgibt.

Ein derartiger Extrusionskopf ist dem Anmelder bekannt.

Ferner betrifft die Erfindung die Verwendung eines Extrusionskopfes.

Bei dem Blasformen wird der Vorformling aus dem Extrusionskopf bzw. der Düse ausgestoßen, von einer offenen Blasform aufgenommen und nach dem Schließen der Werkzeugform unter Luftdruck aufgeweitet.

In Abhängigkeit unter anderem auch vom Rohstoff wird zwischen der kontinuierlichen und der diskontinuierlichen Extrusion unterschieden. Niederviskose Werkstoffe (z.B. Polycarbonate (PC) oder Polyamide (PA)) werden üblicherweise diskontinuierlich extrudiert. Sie liegen nach dem Aufschmelzen in fast flüssiger Form vor und müssen in einem Speicherelement gesammelt und dann rasch ausgestoßen und zum fertigen Produkt aufgeweitet werden. Hochviskose Werkstoffe, wie Polyethylene (PE) oder Polypropylene (PP), liegen nach dem Aufschmelzen in zäher Form vor und können kontinuierlich als Vorformling austreten und weiterverarbeitet werden. Der erzeugte Vorformling kann ein- oder mehrschichtig, d.h. aus einem oder mehreren Materialkomponenten aufgebaut sein. Im letzteren Fall spricht man von Coextrusion.

Es werden grundsätzlich zwei Coextrusionsarten unterschieden, nämlich die Coextrusion, bei der mehrschichtige Vorformlinge hergestellt werden, sowie die sequentielle Coextrusion, bei der zueinander kompatible Materialien unterschiedlicher Steifigkeit in einem Blasteil verarbeitet werden, um somit Bauteile mit reproduzierbaren Lagen von beispielsweise aufeinanderfolgenden harten und weichen Bereichen zu schaffen. Hierfür werden beispielsweise die Anteile unterschiedlicher Komponenten über die Längsachse des Vorformlings variiert und somit ein unterschiedliches Verteilungsprofil und somit Materialverhalten eingestellt.

Aus JP 61134220 A ist ein Extrusionskopf zur Herstellung von Hohlkörpern aus mehren Kunststoffschichten bekannt. Hierbei werden einzelne, von einem oberen Punkt aufeinander geführte, Fließkanäle durch vorbeistreichende Kühlluft gekühlt. Die US 4,484,883 A zeigt ebenfalls einen Mehrschicht-Extrusionskopf mit Temperaturkontrollmechanismen. Hierzu ist eine Heizeinrichtung in einen Dom integriert, um den ein innerer Fließkanal ausgebildet ist. Zudem sind äußere Heizeinrichtungen vorgesehen, die die Temperatur der Schmelze eines äußeren Fließkanals kontrollieren sollen.

Die US 5,667,818A zeigt einen Extrusionskopf zur Herstellung eines dreischichtigen Hohlkörpers. Die erste und innere Schicht wird durch einen ringförmigen Fließkanal eingeführt, wobei radial hierzu in unteren Teilen des Blaskopfes die zweite und die dritte Schmelze über weitere Kanäle zugeführt werden und die Schmelzeinspeisestellen jeweils untereinander angeordnet sind.

Aus der EP 0 806 279 A ist ein Extrusionskopf für die Herstellung von druckempfindlichen Kunststoffen bekannt. Hierbei nimmt ein Zuführkanal hinsichtlich seiner Höhe kontinuierlich ab.

Die JP 09 300442 A betrifft einen Mehrschicht-Blaskopf, wobei ein unterer Teil des Blaskopfes so gleitend einstellbar ist, daß der Spalt zwischen der Auslaßspitze des Kopfes und einem Innenkem veränderbar ist.

Aus der US 4,717,326 ist ein Extrusionskopf zur Herstellung eines Vorformlings aus mehreren Kunststoffschmelzen nach dem diskontinuierlichen Coextrusionsverfahren bekannt. Die Zufuhr der Hauptschmelze erfolgt mittels eines kontinuierlich arbeitenden Extruders über ein Verteilerelement in einen im Kopf integrierten Speicherraum mit vertikal angeordnetem Speicherkolben. Der Kopf weist für alle weiteren Schmelzen Einspeisestellen mit horizontal verlaufenden Fließwegen auf, wobei die Schmelze außerhalb des Extrusionskopfgehäuses gespeichert wird. Nach dem im Stand der Technik beschriebenen Coextrusionsverfahren wird die Hauptschmelze mittels eines Stegdomhaltersystems in eine äußere und eine innere Teilschicht aufgeteilt, und während des Trennungsprozesses werden die weiteren Schmelzen als Sperrschichtpolymer oder als Verbindungspolymer zwischen die beiden Hauptschichten eingespritzt. Ein thermisches Trennmittel zwischen den einzelnen Fließwegen ist nicht vorgesehen. Durch die Auslagerung der Speicherung dieser Hilfspolymere in Bereiche außerhalb des Hauptkopfes werden die Kunststoffschmelzen hinsichtlich ihrer Temperatur mittels entsprechender Temperatursteuerungsmittel kontrolliert.

Ausgehend von einem derartigen Stand der Technik liegt der Erfindung die Aufgabe zugrunde, einen Extrusionskopf für die Herstellung eines Blasform-Vorformlings zu schaffen, der bei Gewährleistung einer mehrschichtigen Coextrusion im Verhältnis konstruktiv einfach baut und wobei die gegenseitige thermische Beeinflussung der einzelnen Kunststoffschmelzen möglichst gering ist.

Diese Aufgabe wird bei einem gattungsgemäßen Extrusionskopf dadurch gelöst, daß die Einspeisestelle für eine dritte Schmelze sowie ein Verteilerelement für diese Schmelze oberhalb des Stegdornhalters der ersten Schmelze angeordnet sind und daß die dritte Schmelze über das Verteilerelement entlang eines dritten Fließweges zu einem dritten Ringspalt fließt zur Bildung einer späteren Zwischenschicht im Vorformling.

Zweckmäßige Weiterbildungen der Erfindung sind Gegenstand der abhängegen Ansprüche.

Es wird nach einer Weiterbildung der Erfindung vorgeschlagen, daß im letzten Bereich der Fließwege, in dem diese im wesentlichen parallel zueinander verlaufen, mindestens zwei konzentrische, thermisch isolierende Hülsen zur gegenseitigen Trennung der Fließwege angeordnet sind. Mittels dieser Hülsen beeinflussen sich die Kunststoffschmelzen selbst in dem letzten Bereich vor der Düse, in dem die Fließwege - unmittelbar benachbart - im wesentlichen parallel verlaufen, in thermischer Hinsicht nicht. Dies macht die so vorgeschlagene Kopfkonstruktion sowohl für die mehrschichtige Coextrusion als auch für die sequentielle Coextrusion geeignet.

Während bei der Coextrusion mit anteilig stets gleichen Schichtdicken Temperaturunterschiede teilweise noch akzeptabel sind - lediglich die rheologische Situation wird durch Temperatureinflüsse verändert -, ist dies bei der sequentiellen Coextrusion besonders nachteilig. Bei der sequentiellen Coextrusion wird ein Vorformling mit aufeinanderfolgenden Bereichen unterschiedlichen Materialverhaltens durch ein vorgegebenes Verteilungsprofil von Kunststoffschmelzen hergestellt. Sowohl das Quellverhalten, d.h. der Schlauchdurchmesser, der sich nach Austritt aus der Düse einstellt, das Schlauchausreckverhalten beim Aufblasen des Vorformlings als auch die Schlauchauslängung werden durch Temperaturänderungen stark beeinflußt.

Insgesamt gewährleistet der erfindungsgemäß vorgeschlagene Extrusionskopf über die Trennung der Schmelzen über den gesamten Fließweg, zuerst über eine räumliche Trennung, anschließend über eine Trennschicht mittels isolierender Hülsen, daß es nicht zu einem Wärmeaustausch zwischen den einzelnen Kunststoffschmelzen kommt. Somit wird die jeweils optimale Verarbeitungstemperatur einer Kunststoffschmelze nicht durch thermische Wechselwirkung mit einer anderen Schmelze verändert und eine reproduzierbare Herstellung des Vorformlings gewährleistet. Die jeweiligen Schmelzen können daher ohne Probleme mit ihren optimalen Verarbeitungstemperaturen eingespeist und über ihren entsprechenden Fließweg zur Ausstoßdüse ohne gegenseitige thermische Beeinflussung geleitet werden.

Eine bevorzugte Ausführungsform des Extrusionskopfes für eine dreischichtige Coextrusion umfaßt als Verteilerelement eine Pinole, einen nachfolgenden Stegdornhalter und zum Einbringen der zweiten Schmelze ein unterhalb des Stegdornhalters sich anschließendes, horizontal erstreckendes, Ringverteilersystem. Aufgrund dieser Konstruktion baut der Kopf im Bereich des Ringverteilers insgesamt relativ flach.

Zudem sind vorteilhafterweise Isolationsmittel vorgesehen, die mindestens zwei Fließwege thermisch voneinander trennen, beispielsweise durch Luftschlitze. Hierdurch wird die Behinderung eines gegenseitigen Wärmeaustausch ebenfalls unterstützt.

Der Extrusionskopf ist vorzugsweise mit außerhalb angeordneten Speicherräumen für die jeweiligen Kunststoffschmelzen versehen. Ein Einbringen über die Schmelzeeinspeisestellen geschieht diskontinuierlich. Es ist aber nicht ausgeschlossen, eine diskontinuierliche Betriebsweise über im Extrusionskopf jeweils integrierte Speicherräume mit Ausstoßkolben in Richtung der jeweiligen Ringspalte zu betreiben. Grundsätzlich ist auch ein kontinuierlicher Betrieb bei der Coextrusion denkbar.

Der Schutzumfang der vorliegenden Erfindung ist nicht auf eine dreischichtige Coextrusion beschränkt. Es können weitere Einspeise- und Verteilerelemente vorgesehen sein, beispielsweise durch seitliches Zufließen von Schmelzekomponenten über mehrere Verteilsysteme. Neben dem zweiten Schmelzefließweg ist dann mindestens ein vierter Schmelzefließweg für eine weitere Kunststoffschmelze angeordnet, der sich von einer Schmelzeeinspeisestelle bis zu einem Ringspalt erstreckt und der in einer parallelen Ebene zu derjenigen verläuft, in der der zweite Schmelzefließweg liegt.

Weitere Einzelheiten und Vorteile ergeben sich aus der nachfolgenden Beschreibung einer Ausführungsform der Erfindung. Hierbei zeigt die einzige Figur schematisch einen Extrusionskopf für die Herstellung eines Blasform-Vorformlings.

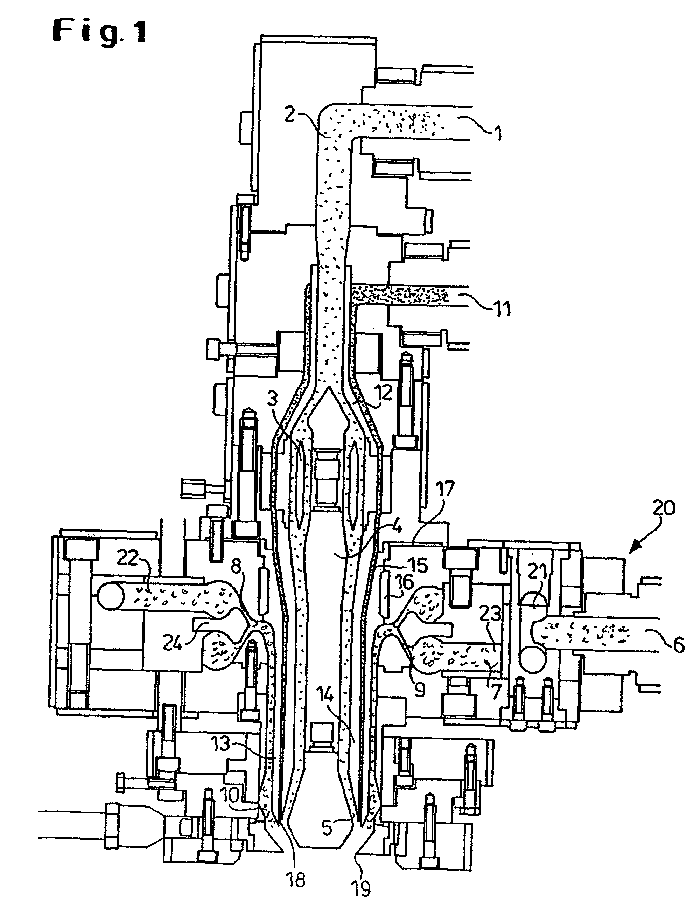

Dem in Figur 1 dargestellten Extrusionskopf werden drei unterschiedliche Kunststoffschmelzen von - nicht dargestellten - außerhalb des Extrusionskopfes angeordneten Extrudern diskontinuierlich zugeführt. Die erste Schmelze gelangt an der ersten Schmelzeeinspeisestelle 1 in den Kopf und fließt entlang des ersten Fließweges 2 über einen Stegdomhalter 3 entlang eines Doms 4. Der Dom 4 wird von der ersten Kunststoffschmelze konzentrisch umflossen, bevor diese durch den ersten Ringspalt 5 austritt. Anstelle des hier versetzten Stegdomhalters 3 kann auch ein einfacher Stegdornhalter vorgesehen sein. Denkbar sind auch zwei einfach angeströmte Stegdomhalter.

Die zweite Kunststoffschmelze tritt an der zweiten Schmelzeeinspeisestelle 6 in den Extrusionskopf ein. Sie fließt entlang des zweiten Fließweges 7 zunächst in einer Richtung, die im wesentlichen rechtwinklig zu der Fließrichtung des ersten Schmelzestroms ist Erst nach Passieren der Ringkanäle 8, 9 wird die zweite Kunststoffschmelze umgelenkt und fließt dann im wesentlichen parallel zur ersten Schmelze in Richtung des zweiten Ringspaltes 10.

Eine dritte Kunststoffschmelze wird über ein dritte Schmelzeinspeisestelle 11 eingeführt. Die Schmelze wird über eine Pinole 12 konzentrisch um die erste Schmelze verteilt und fließt dann im wesentlichen parallel zum ersten Schmelzefließweg 2. Die Pinole 12 weitet sich konisch um den Stegdornhalter 3 aus. In Verlängerung zu dieser Pinole 12 bilden thermisch isolierende Hülsen 13, 14 die Fließwegbegrenzungen für die erste, zweite und dritte Schmelze. Hierbei sind die beiden Hülsen 13, 14 so zueinander angeordnet, daß der Fließweg 15 der dritten Schmelze am schmalsten ist. Durch geeignete geometrische Anordnung der Hülsen 13, 14 zueinander kann die Schichtdicke der Zwischenschicht beeinflußt werden. Durch die beiden Hülsen wird in dem Bereich, in dem sich ein paralleler Fluß der Schmelzeströme verfahrensbedingt nicht vermeiden läßt, der Wärmeübergang von einer auf die andere Schmelze minimiert Derartige Hülsen sind beispielsweise aus einem schlechten Wärmeleiter gefertigt, wie aus einem schlechtwärmeleitenden Stahl.

Zur zusätzlichen thermischen Behinderung sind als Isolationsmittel Vakuumelemente oder Luftspalte 16, 17 vorgesehen. Auf diese Weise wird insbesondere ein Wärmeaustausch zwischen den vertikal und horizontal fließenden Schmelzströmungen verhindert, d.h. eine Wärmetrennung zwischen der zweiten sowie ersten bzw. dritten Schmelze gewährleistet.

Die drei Schmelzen fließen in dem ersten, zweiten sowie dritten Ringspalt 5, 10, 18 parallel und gelangen dann zur gemeinsamen Düse 19, die den Blasform-Vorformling abschließend formt.

Der Extrusionskopf umfaßt in der dargestellten bevorzugten Ausführungsform drei Schmelzeeinspeisestellen 1, 6, 11, wobei in der folgenden Reihenfolge zuerst die dritte Schmelze über einen Pinolenverteiler 12, die erste Schmelze über einen Stegdornhalter 3 und die zweite Schmelze über einen Ringverteiler 20 fließen, um kurz vor der Düse 19 für einen kurzen Zeitraum durch thermisch isolierende Hülsen 13, 14 getrennt parallel zu fließen.

Im Falle der dreischichtigen Coextrusion kann beispielsweise die erste Schmelze im ersten Ringspalt 5 eine Barriereschicht sein, während die dritte Schmelze als Zwischenschicht ein Haftvermittler ist. Die zweite Schmelze, die die Außenschicht bildet, ist beispielsweise eine Trägerschicht. Barriere- und Haftvermittlerschicht können durch den erfindungsgemäßen Extrusionskopf sehr dünn ausgebildet werden. Im Falle der sequentiellen Coextrusion mit zwei Komponenten wird die dritte Einspeisestelle nicht mit Kunststoffschmelze versorgt. Durch Aktivierung der dritten Einspeisestelle ist eine dreifache sequentielle Coextrusion möglich.

Die zweite, horizontal eingespeiste, Kunststoffschmelze muß vor der Einleitung in die Hülse 13 möglichst gut und ohne Nahtbereiche verteilt sein, um eine einwandfreie Qualität des Vorformlings zu gewährleisten. Hierzu wird der von der zweiten Schmelzeinspeisestelle 6 kommende Schmelzestrom mittels des Schmelzeteilers 21 in einen "oberen" und "unteren" Teilschmelzestrom 22, 23 aufgeteilt.

Die beiden Teilschmelzeströme 22, 23 müssen die Ringkanäle 8, 9 passieren, bevor sie - um 90° umgelenkt - in die Hülse 13 eintreten. Dabei sind die Eintrittsstellen der beiden Teilschmelzeströme 22, 23 um 180° versetzt. So wird erreicht, daß sich eine optimale Überlappung der beiden Ströme und damit eine möglichst nahtstellenfreie Ausbildung des Schmelzeschlauches ergibt. Vorzugsweise kommt der dargestellte Ringkanalverteiler zum Einsatz; alternativ ist es auch möglich, daß als Verteilerelement Herzkurvenverteiler oder Wendelkanalverteiler eingesetzt werden. Die Größe der beiden Ringkanäle 8, 9 ist hierbei mittels des dargestellten Einstellmittels 24 einstellbar.

## Patentansprüche

1. Extrusionskopf für das Blasformen von Hohlkörpern aus thermoplastischem Kunststoff, der einen aus mindestens zwei unterschiedlichen Kunststoffen bestehenden Vorformling herstellt, umfassend
mindestens drei Schmelzeeinspeisestellen (1, 6, 11),
wobei eine erste Kunststoffschmelze von einer ersten Schmelzeeinspeisestelle (1) in einer ersten Richtung entlang eines ersten Fließweges (2) über einen Stegdornhalter (3) in einen ersten Ringspalt (5) geführt wird, der die Dicke des Vorformlings in Bezug auf die erste Kunststoffschmelze beeinflusst,
wobei mindestens eine zweite Kunststoffschmelze von einer zweiten Schmelzeeinspeisestelle (6) entlang eines zweiten Fließweges (7) bis zu einem zweiten Ringspalt (10) geführt wird,
wobei die Fließwegrichtung des ersten Fließweges (2) und des zweiten Fließweges (7) über einen großen Teil der jeweiligen Fließwege unter einem Winkel, vorzugsweise im wesentlichen rechtwinklig, zueinander verlaufen und nur im letzten Bereich in der Nähe des ersten (5) und zweiten (10) Ringspalts im wesentlichen parallel zueinander verlaufen,
sowie eine den Ringspalten nachgeschaltete Düse (19), die die Dicke des Vorformlings vorgibt,
**dadurch gekennzeichnet,**
**daß** die Einspeisestelle (11) für die dritte Schmelze sowie ein Verteilerelement (12) für diese Schmelze oberhalb des Stegdornhalters (3) für die erste Schmelze angeordnet ist und die dritte Schmelze über das Verteilerelement (12) entlang eines dritten Fließweges (15) zu einem dritten Ringspalt (18) fließt zur Bildung einer späteren Zwischenschicht im Vorformling.

2. Extrusionskopf nach Anspruch 1,
**dadurch gekennzeichnet,**
**daß** im letzten Bereich der Fließwege, in dem diese im wesentlichen parallel zueinander verlaufen, mindestens zwei konzentrische, thermisch isolierende Hülsen (13, 14) zur gegenseitigen Trennung der Fließwege angeordnet sind.

3. Extrusionskopf nach Anspruch 1 oder 2,
**dadurch gekennzeichnet,**
**daß** das Verteilerelement eine Pinole (12) ist und
**daß** zur Einbringung der zweiten Schmelze ein Ringverteilersystem vorgesehen ist.

4. Extrusionskopf nach einem der Ansprüche 1 bis 3,
**dadurch gekennzeichnet,**
**daß** Isolationsmittel (16, 17) vorgesehen sind, die mindestens zwei Fließwege thermisch voneinander trennen.

5. Extrusionskopf nach Anspruch 3,
**dadurch gekennzeichnet,**
**daß** der Stegdornhalter (3) ein versetzter Stegdornhalter ist und das Ringverteilersystem zur weiteren Aufteilung des Schmelzefließweges in jeweils zwei Teilringkanäle (8, 9) ausgebildet ist.

6. Extrusionskopf nach einem der Ansprüche 1 bis 5,
**dadurch gekennzeichnet,**
**daß** außerhalb des Kopfes Speicher angeordnet sind zum Speichern der extrudierten Kunststoffschmelzen und Mittel vorhanden sind zur diskontinuierlichen Abgabe der Schmelzen an die jeweiligen Einspeisestellen.

7. Extrusionskopf nach einem der Ansprüche 1 bis 6,
**dadurch gekennzeichnet,**
**daß** neben dem zweiten Schmelzefließweg (7) mindestens ein vierter Schmelzefließweg für eine weitere Kunststoffschmelze angeordnet ist, der sich von einer vierten Schmelzeeinspeisestelle bis zu einem Ringspalt erstreckt und der in einer parallelen Ebene zu derjenigen verläuft, in der der zweite Schmelzefließweg liegt.

8. Extrusionskopf nach Anspruch 7,
**dadurch gekennzeichnet,**
**daß** der zweite Schmelzefließweg durch Überlagerung zweier Teilschmelzeströme (22, 23) gebildet wird, wobei der gesamte Schmelzestrom nach der Schmelzeeinspeisestelle in zwei Teilschmelzeströme, insbesondere in einen oberen (22) und einen unteren (23), geteilt wird, wobei die beiden Teilschmelzeströme in parallelen Ebenen zueinander verlaufen und mittels jeweils eines Ringkanals (8, 9) verteilt werden, wobei die Einspeisestellen der Teilschmelzeströme in die Ringkanäle zueinander um 180° versetzt sind.

9. Extrusionskopf nach Anspruch 8,
**dadurch gekennzeichnet,**
**daß** Einstellmittel (24) vorgesehen sind, mit denen die Verteilcharakteristik der beiden Schmelzeströme in den Ringkanälen zueinander beeinflußbar sind.

10. Verwendung eines Extrusionskopfes nach einem der vorherigen Ansprüche für eine dreischichtige Coextrusion.

11. Verwendung eines Extrusionskopfes nach einem der vorherigen Ansprüche für eine sequentielle Coextrusion.

## Claims

1. An extrusion die for blow moulding hollow bodies consisting of a thermoplastic plastic, wherein said extrusion die produces a preform that consists of at least two different plastics, wherein at least three feeding points (1, 6, 11) for the molten masses are provided, wherein a first molten plastic mass is conveyed from a first feeding point (1) to a first annular gap (5) that influences the thickness of the preform referred to the first molten plastic mass, namely in a first direction along a first flow path (2) via a gate arbor holder (3), wherein at least a second molten plastic mass is conveyed from a second feeding point (6) to a second annular gap (10) along a second flow path (7), wherein the flow path directions of the first flow path (2) and the second flow path (7) extend at an angle relative to one another, preferably an essentially right angle, over a large portion of the respective flow paths and only lie essentially parallel to one another in end regions near the first (5) and the second (10) annular gap, and wherein a nozzle (19) that is arranged downstream of the annular gaps defines the thickness of the preform,
**characterized in that**
the feeding point (11) for the third molten mass, as well as a distribution element (12) for this molten mass, are arranged above the gate arbor holder (3) for the first molten mass, and **in that** the third molten mass is conveyed to a third annular gap (18) along a third flow path (15) by the distribution element (12) in order to subsequently form an intermediate layer in the preform.

2. The extrusion die according to Claim 1,
**characterized in that**
at least two concentric, thermally insulating sleeves (13, 14) for mutually separating the flow paths are arranged in the end regions of the flow paths, in which they essentially extend parallel to one another.

3. The extrusion die according to Claim 1 or 2,
**characterized in that**
the distribution element consists of a quill (12), and **in that** a ring distribution system is provided in order to feed the second molten mass.

4. The extrusion die according to one of Claims 1-3,
**characterized in that**
insulating means (16, 17) are provided for thermally separating the at least two flow paths from one another.

5. The extrusion die according to Claim 3,
**characterized in that**
the gate arbor holder (3) consists of an offset gate arbor holder, and **in that** the ring distribution system is realized in the form of two respective partial ring channels (8, 9) in order to additionally partition the flow path of the molten mass.

6. The extrusion die according to one of Claims 1-5,
**characterized in that**
reservoirs for accommodating the extruded molten plastic masses are arranged outside the die, and **in that** means are provided for discontinuously delivering the molten masses to the respective feeding points.

7. The extrusion die according to one of Claims 1-6,
**characterized in that**
at least a fourth flow path for an additional molten plastic mass is arranged adjacent to the second flow path (7), wherein the fourth flow path extends from a fourth feeding point to an annular gap, namely in a plane that lies parallel to the plane of the second flow path.

8. The extrusion die according to Claim 7,
**characterized in that**
the second flow path is formed by superimposing two partial molten mass flows (22, 23), wherein the entire molten mass flow is, in particular, divided into an upper (22) and a lower (23) partial molten mass flow downstream of the feeding point, wherein the two partial molten mass flows extend in parallel planes and are distributed by means of respective ring channels (8, 9), and wherein the feeding points of the partial molten mass flows into the annular channels are offset relative to one another by 180°.

9. The extrusion die according to Claim 8,
**characterized in that**
adjusting means (24) are provided for influencing the relative distribution characteristics for both molten mass flows in the ring channels.

10. The utilization of an extrusion die according to one of the preceding claims for a three-layer coextrusion.

11. The utilization of an extrusion die according to one of the preceding claims for a sequential coextrusion.

## Revendications

1. Tête d'extrusion pour l'extrusion-soufflage de corps creux en matière plastique thermoplastique servant à fabriquer une ébauche consistant en au moins deux matières plastiques différentes, comportant
au moins trois points d'alimentation en coulée (1, 6, 11),
une première coulée de matière plastique étant guidée à partir d'un premier point d'alimentation en coulée (1) dans un premier sens le long d'une première trajectoire de flux (2) par un support à mandrin transversal (3) vers une première fente annulaire (5) qui influe sur l'épaisseur de l'ébauche au niveau de la première coulée de matière plastique,
au moins une deuxième coulée de matière plastique étant guidée à partir d'un deuxième point d'alimentation en coulée (6) le long d'une deuxième trajectoire de flux (7) jusqu'à une deuxième fente annulaire (10),
les sens de trajectoire de flux de la première trajectoire de flux (2) et de la deuxième trajectoire de flux (7) s'étendant l'un par rapport à l'autre en angle, de préférence sensiblement en angle droit, sur une grande partie de la trajectoire de flux respective, et s'étendant sensiblement parallèlement l'un à l'autre uniquement dans la dernière zone à proximité de la première (5) et deuxième (10) fente annulaire,
ainsi qu'une buse (19) installée en aval des fentes annulaires (19) qui prédéfinit l'épaisseur de l'ébauche,
**caractérisée en ce que**
le point d'alimentation (11) pour la troisième coulée ainsi qu'un élément répartiteur (12) pour cette coulée sont disposés au dessus du support à mandrin transversal (3) pour la première coulée et que la troisième coulée s'écoule grâce à l'élément répartiteur le long d'une troisième trajectoire de flux (15) vers une troisième fente annulaire (18) pour former une couche intermédiaire ultérieure dans l'ébauche.

2. Tête d'extrusion selon la revendication 1,
**caractérisée en ce que**
dans la demière zone des trajectoires de flux dans laquelle ceux-ci s'étendent sensiblement parallèlement les uns aux autres, sont disposés au moins deux manchons concentriques isolateurs thermiques (13, 14) servant à la séparation réciproque des trajectoires de flux.

3. Tête d'extrusion selon la revendication 1 ou 2,
**caractérisée en ce que**
l'élément répartiteur est un fourreau (12) et que il est prévu un système de répartition annulaire pour l'intégration de la deuxième coulée.

4. Tête d'extrusion selon l'une quelconque des revendications 1 à 3,
**caractérisée en ce que**
sont prévus des moyens d'isolation (16, 17) qui séparent thermiquement l'une de l'autre au moins deux trajectoires de flux.

5. Tête d'extrusion selon la revendication 3,
**caractérisée en ce que**
le support à mandrin transversal (3) est un support à mandrin transversal décalé et que le système de répartition annulaire servant à partager davantage la trajectoire de flux de coulée est conçu respectivement sous forme de deux canaux annulaires partiels (8, 9).

6. Tête d'extrusion selon l'une quelconque des revendications 1 à 5,
**caractérisée en ce que**
des accumulateurs sont disposés à l'extérieur de la tête afin d'accumuler les coulées de matière plastique extrudées et que sont prévus des moyens de distribution discontinue des coulées aux points d'alimentation respectifs.

7. Tête d'extrusion selon l'une quelconque des revendications 1 à 6,
**caractérisée en ce que**
outre la deuxième trajectoire de flux de coulée (7), il est prévu au moins une quatrième trajectoire de flux de coulée pour une autre coulée de matière plastique, cette trajectoire s'étendant d'un quatrième point d'alimentation en coulée à une fente annulaire et s'étendant dans un plan parallèle à celui où se trouve la deuxième trajectoire de flux de coulée.

8. Tête d'extrusion selon la revendication 7,
**caractérisée en ce que**
la deuxième trajectoire de flux de coulée est constituée par superposition de deux flux de coulée partiels (22, 23), l'ensemble du flux de coulée étant, après le point d'alimentation en coulée, divisé en deux flux de coulée partiels, notamment un supérieur (22) et un inférieur (23), les deux flux de coulée partiels s'étendant dans des plans parallèles l'un à l'autre et étant divisés au moins d'un canal annulaire (8, 9) respectivement, les points d'alimentation en coulée des flux de coulée partiels étant décalés l'un par rapport à l'autre de 180° vers les canaux annulaires.

9. Tête d'extrusion selon la revendication 8,
**caractérisée en ce que**
sont prévus des moyens de réglage (24) grâce auxquels on peut influer sur la caractéristique de répartition des deux flux de coulée l'un par rapport à l'autre vers les canaux annulaires.

10. Utilisation d'une tête d'extrusion selon l'une quelconque des revendications précédentes pour une coextrusion en trois couches.

11. Utilisation d'une tête d'extrusion selon l'une quelconque des revendications précédentes pour une coextrusion séquentielle.
